(19) Europäisches Patentamt / European Patent Office / Office européen des brevets

(11) **EP 3 607 679 B1**

(12) **EUROPEAN PATENT SPECIFICATION**

(45) Date of publication and mention
of the grant of the patent:
**20.04.2022 Bulletin 2022/16**

(21) Application number: **18797756.6**

(22) Date of filing: **03.05.2018**

(51) International Patent Classification (IPC):
**H04J 14/00** (2006.01)  **H04B 10/2575** (2013.01)
**H01Q 3/26** (2006.01)  **H01Q 3/40** (2006.01)
**H04Q 11/00** (2006.01)  **H04B 7/06** (2006.01)

(52) Cooperative Patent Classification (CPC):
**H04Q 11/0005; H04B 7/0617; H04B 10/25754;**
H01Q 3/2676; H01Q 3/40; H04B 2210/006;
H04Q 2011/0052

(86) International application number:
**PCT/CN2018/085417**

(87) International publication number:
**WO 2018/205876 (15.11.2018 Gazette 2018/46)**

(54) **OPTICAL IMPLEMENTATION OF A BUTLER MATRIX**

OPTISCHE IMPLEMENTIERUNG EINER BUTLER-MATRIX

MISE EN OEUVRE OPTIQUE D'UNE MATRICE DE BUTLER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.05.2017 US 201762505681 P
27.04.2018 US 201815965579**

(43) Date of publication of application:
**12.02.2020 Bulletin 2020/07**

(73) Proprietor: **Huawei Technologies Co., Ltd.
Longgang District
Shenzhen, Guangdong 518129 (CN)**

(72) Inventors:
• **LIU, Xiang**
**Shenzhen, Guangdong 518129 (CN)**
• **LIU, Huiyuan**
**Orlando, FL 32816 (US)**
• **EFFENBERGER, Frank**
**Frisco, TX 75035 (US)**

(74) Representative: **Grünecker Patent- und
Rechtsanwälte
PartG mbB
Leopoldstraße 4
80802 München (DE)**

(56) References cited:
**CN-A- 102 763 279**  **CN-A- 105 375 957**
**US-A1- 2013 223 840**  **US-A1- 2016 006 532**

• **MARTI J ET AL: "Performance evaluation of
multi-beam beamformers in the 40 GHz band",
INTERNET CITATION, 12 November 2002
(2002-11-12), XP002439478, Retrieved from the
Internet:
URL:http://ist-obanet.upv.es/pub/D5_2_PUB.pdf
[retrieved on 2007-06-27]**
• **JOHN T GALLO ET AL: "Experimental
Demonstration of Optical Guided-Wave Butler
Matrices", IEEE TRANSACTIONS ON
MICROWAVE THEORY AND TECHNIQUES,
PLENUM, USA, vol. 45, no. 8, 1 August 1997
(1997-08-01) , XP011036900, ISSN: 0018-9480**

EP 3 607 679 B1

**Description**

**TECHNICAL FIELD**

The disclosure is related to the technical field of optical communication devices, and more specifically the use of a Butler matrix in optical communication devices.

**BACKGROUND**

Internet traffic is quickly increasing due to bandwidth-demanding services such as video streaming and multiple-device control. To access broader bandwidth in order to support such services in 5G, there is interest in using the millimeter waveband. Due to their short wavelengths, millimeter wavelength signals suffer from high path loss and low diffraction around obstacles. For that reason, the millimeter waveband is well suited for short distance transmission such as indoor transmission. To enable usage of the millimeter waveband for longer transmission distances and lower power consumption, various approaches such as MIMO beamforming and RoF PAAs are being considered.

J. Marti et al., in a paper entitled "Performance evaluation of multi-beam beamformers in the 40 GHz band", IST-200-25390 OBANET D5.2, 2002, teach the provision of a Butler matrix to optically beamform data signals in the context of 40 GHz band communication.

**SUMMARY**

In an embodiment, the present disclosure comprises a system according to claim 1.

In another embodiment, the present disclosure comprises a method according to claim 10.

Any of the above embodiments may be combined with any of the other above embodiments to create a new embodiment. These and other features will be more clearly understood from the following detailed description taken in conjunction with the accompanying drawings and claims.

**BRIEF DESCRIPTION OF THE DRAWINGS**

For a more complete understanding of this disclosure, reference is now made to the following brief description, taken in connection with the accompanying drawings and detailed description, wherein like reference numerals represent like parts.

FIG. 1 is a schematic diagram of an RoF system demonstrating a DL configuration according to an embodiment of the disclosure.
FIG. 2 is a schematic diagram of an RoF system demonstrating a UL configuration according to an embodiment of the disclosure.
FIG. 3 is a schematic diagram of a Butler matrix system according to an embodiment of the disclosure.
FIG. 4 is a schematic diagram of a Butler matrix system according to another embodiment of the disclosure.
FIG. 5 is a schematic diagram of a Butler matrix system according to yet another embodiment of the disclosure.
FIG. 6 is a flowchart illustrating a method of optically implementing a Butler matrix according to an embodiment of the disclosure.
FIG. 7 is a schematic diagram of an apparatus according to an embodiment of the disclosure.

**DETAILED DESCRIPTION**

It should be understood at the outset that, although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

The following abbreviations and initialisms apply:

ADC: analog-to-digital converter
ASIC: application-specific integrated circuit
BBU: baseband unit
CO: central office
CPU: central processing unit

DAC: digital-to-analog converter
DD: direct detection
DC: direct current
DL: downlink
DMD: digital micromirror device
DML: directly modulated laser
DSP: digital signal processor
EDFA: erbium-doped fiber amplifier
EML: electro-absorption modulated laser
EO: electrical-to-optical
FPGA: field-programmable gate array
IM: intensity-modulated, intensity modulation
MEMS: micro-electro-mechanical systems
MIMO: multiple-input and multiple-output
MZM: Mach-Zehnder modulator
OE: optical-to-electrical
OFDM: orthogonal frequency-division multiplexing
PAA: phased-array antenna
PIC: photonic integrated circuit
PIN: p-type, intrinsic, n-type
PS: phase shifter
RAM: random-access memory
RAN: radio access network
RF: radio frequency
RoF: radio over fiber
ROM: read-only memory
RRU: remote radio unit
RX: receiver unit
SRAM: static RAM
TCAM: ternary content-addressable memory
TX: transmitter unit
UE: user equipment
UL: uplink
WDM: wavelength-division multiplexer
3G: third generation
4G: fourth generation
5G: fifth generation
°: degree(s).

Various approaches to RoF systems implement MZMs to modulate optical signal phases, phase controllers to modulate optical signal phases, and IM-DD to modulate and detect optical signals. However, MZM systems are expensive and complex; phase controllers are expensive and complex; and prior IM-DD systems use a laser and a detector for each antenna, making those systems expensive and complex. There is therefore a desire for an RoF system that is less expensive and less complex.

Disclosed herein are embodiments for optical implementation of a Butler matrix. The embodiments comprise Butler matrix systems that introduce phase shifts to optical signals. The phase shifts correspond to antennae in a MIMO beamforming scheme. The optical signals are modulated with IM and detected with DD. Use of the Butler matrix system reduces a number of DACs and lasers used, thus reducing size, weight, and cost.

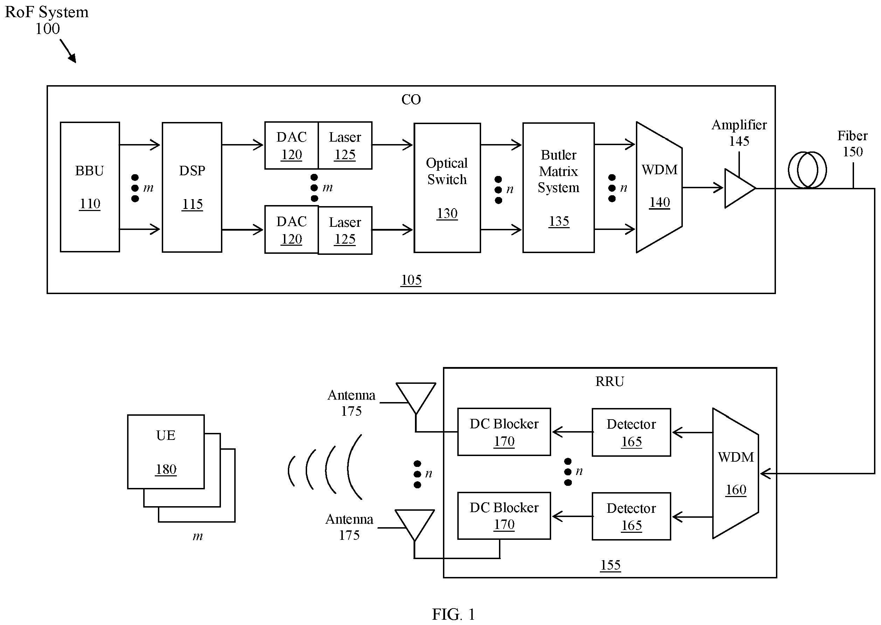

FIG. 1 is a schematic diagram of an RoF system 100 demonstrating a DL configuration according to an embodiment of the disclosure. The RoF system 100 generally comprises a CO 105, a fiber 150, an RRU 155 coupled to the CO 105 by the fiber 150, and up to m number of UEs 180. The m term is a positive integer, for instance sixteen in some examples. It should be understood that the CO 105 (and the BBU 110) may be communicatively coupled to one or more other devices or networks, such as infrastructure of a RAN, a fiber optic or cable network, or a packet network. A direction from the CO 105 to the RRU 155 (and the UEs 180) is referred to as a DL direction. A direction from the UEs 180 and the RRU 155 to the CO 105 is referred to as a UL direction.

The CO 105 comprises a BBU 110, a DSP 115 coupled to the BBU 110, m number of DACs 120 coupled to the DSP 115, *m* number of lasers 125 coupled to the *m* number of DACs 120, an optical switch 130 coupled to the m number of lasers 125, a Butler matrix system 135 coupled to the optical switch 130, a WDM 140 coupled to the Butler matrix system 135, and an amplifier 145 coupled to the WDM 140. The lasers 125 may be DMLs or EMLs in some embodiments and may operate at different wavelengths. The lasers 125 may use IM in some embodiments and thus be referred to as IM lasers. The optical switch 130 is an $m$ x $n$ optical switch in some embodiments and comprises $m$ optical input ports and $n$ optical output ports, for example. The $n$ term is a positive integer, for instance four times the $m$ term and thus 64 in some examples. A combination of input fibers, collimating lenses, a DMD, a Fourier lens, and output fibers may implement the optical switch 130. The Butler matrix system 135 comprises $n$ optical input ports and $n$ optical output ports in some embodiments, and is described below. Each of the $m$ outputs of the BBU 110 is received in one of the $n$ input ports of the Butler matrix system 135. The optical switch 130 maps the $m$ BBU outputs to the $n$ Butler matrix inputs. The amplifier 145 may be an EDFA in some embodiments.

The RoF system 100 shows a single fiber 150 coupling the CO 105 to the RRU 155. Alternatively, the RoF system 100 comprises multiple fibers coupling the CO 105 and the RRU 155. In some examples, the multiple fibers can comprise $n$ number of fibers, and in that case, the RoF system 100 may not comprise the WDMs 140, 160. The multiple fibers may be in a fiber bundle.

The RRU 155 comprises a WDM 160, $n$ number of detectors 165 coupled to the WDM 160, $n$ number of DC blockers 170 coupled to the detectors 165, and $n$ number of antennae 175 coupled to the DC blockers 170. The detectors 165 may be PIN diodes. The detectors 165 may use DD and thus be referred to as DD detectors. The DC blockers 170 may be digital filters. The UEs 180 are mobile phones or other devices and are associated with users.

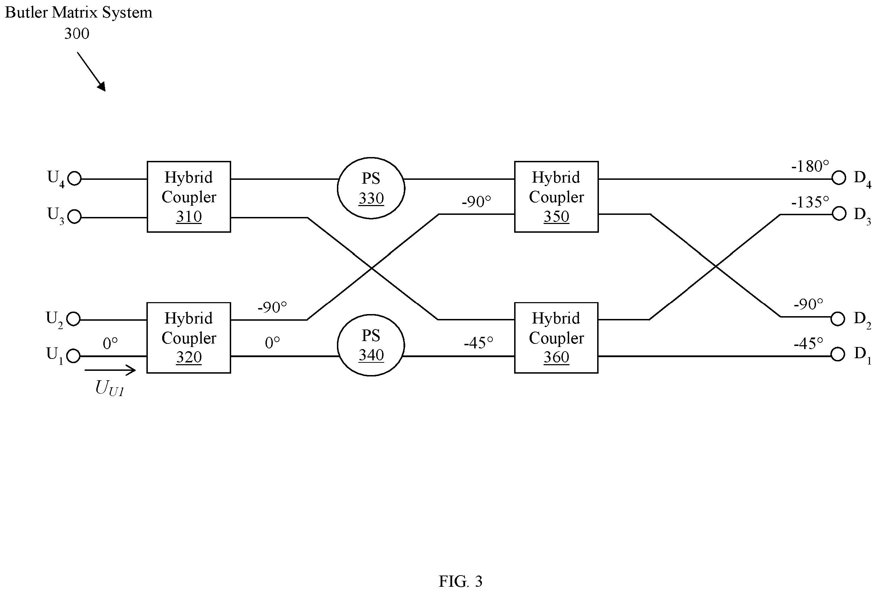

The RoF system 100 may be implemented as part of a wireless OFDM communication system. The UEs may communicate wirelessly with the RRU 155, such as via a 3G, 4G, or 5G telecommunications standard. The BBU 110 may generate a signal to be transmitted, or may be coupled to other devices, systems, or networks and may receive and relay the signal to be transmitted. The signal to be transmitted may comprise a digital electronic signal in some examples. The CO 105 can generate up to a maximum of m number of data streams for transmission to the m UEs 180. The BBU 110, together with the DSP 115, passes the signal to be transmitted to a DAC 120 of the m number of DACs 120, which converts the signal to an analog electrical signal. A laser 125 of the m number of lasers 125 generates a modulated optical signal that is modulated according to the analog electrical signal. The optical switch 130 provides the modulated optical signal to the Butler matrix system 135. The Butler matrix system 135 creates $n$ number of modulated optical signal outputs at differing phase shifts (see discussion below for FIG. 3) for the received modulated optical signal. While a signal received at the Butler matrix system 135 will be received at a single input port, it should be understood that multiple signals can be received on multiple corresponding input ports at a given time. The WDM 140 multiplexes the $n$ number of phase-shifted modulated optical signals (all at the same frequency but at different phases) into a serial optical data stream. The WDM 140 combines multiple signals at different wavelengths so the multiple signals can be transmitted together over the fiber 150. The serial optical data stream is transferred to the RRU 155 via the fiber 160, wherein the WDM 160 demultiplexes the serial optical data stream into the parallel $n$ number of phase-shifted modulated optical signals and provides them to the $n$ number of detectors 165, which generates $n$ number of phase-shifted electrical signals. The RRU 155 emits the $n$ number of electrical signals using the $n$ number of antennas 175. The $n$ number of phase-shifted electrical signals are radiated by the $n$ number of antennas 175 to generate a directional beam, wherein constructive and destructive interference by the radiation generates a substantially directional lobe or beam that is directed toward a corresponding UE 180. This is commonly known as beamforming.

In operation, in the CO 105, the BBU 110 provides one or more data streams to the DSP 115. The BBU 110 can provide up to m number of data streams to the DSP 115. For simplicity, one data stream intended for one UE 180 is discussed. The DSP 115 converts the data stream into a digital electrical signal. The DAC 120 converts the digital electrical signal into an analog electrical signal. The laser 125 generates an optical signal and modulates the analog electrical signal onto the optical signal using IM to create a modulated optical signal. The optical switch 130 switches the modulated optical signal from an optical input port of the optical switch 130 to a desired optical output port of the optical switch 130, then passes the modulated optical signal to a corresponding optical input port of the Butler matrix system 135. A MEMS component or another component may control the optical switch 130. The Butler matrix system 135 introduces a phase shift to the modulated optical signal to create a shifted optical signal, which may also be referred to as a phase-shifted modulated optical signal. The phase shift is based on the optical input port of the Butler matrix system 135 that is receiving the modulated optical signal. The Butler matrix system 135 passes the shifted optical signal from a corresponding optical output port of the Butler matrix system 135 to the WDM 140. The WDM 140 multiplexes the shifted optical signal with other shifted optical signals (if present) to create a combined optical signal. The amplifier 145 amplifies the combined optical signal to create an amplified optical signal and passes the amplified optical signal towards the RRU 155 over the fiber 150.

In the RRU 155, the WDM 160 demultiplexes the amplified optical signal to obtain a single received optical signal in this example, corresponding to the shifted optical signal from the Butler matrix system 135. A detector 165 converts the received optical signal into a received analog electrical signal using DD. A DC blocker 170 removes a DC component of the received analog electrical signal to create a DC-free analog electrical signal. Based on the DC-free analog electrical signal, an antenna 175 transmits a RF signal towards the UE 180. Multiple antennae 175 may do so to implement MIMO beamforming in some embodiments. In that case, each antenna 175 receives a different DC-free analog electrical signal corresponding to a different shifted optical signal from the Butler matrix system 135 and based on an amount of shift in each shifted optical signal. The UE 180 receives the RF signal, converts the RF signal into an electrical signal, and further processes the electrical signal.

As shown, the RoF system 100 uses *m* number of lasers 125 to implement *n* number of antennae 175. The RoF system 100 may do so because the Butler matrix system 135 creates, for each input optical signal, four output optical signals with different phase shifts for a total of up to *n* number of output optical signals. Thus, compared to other approaches, the RoF system 100 uses one-quarter of the number of DACs 120 and lasers 125. In addition, the use of IM and DD are simpler, and use less components, than other modulation and detection techniques. By reducing the number of components, the RoF system 100 reduces its size, weight, and cost. In addition, because the RoF system 100 uses optical modulation, its modulation is substantially immune to electromagnetic interference.

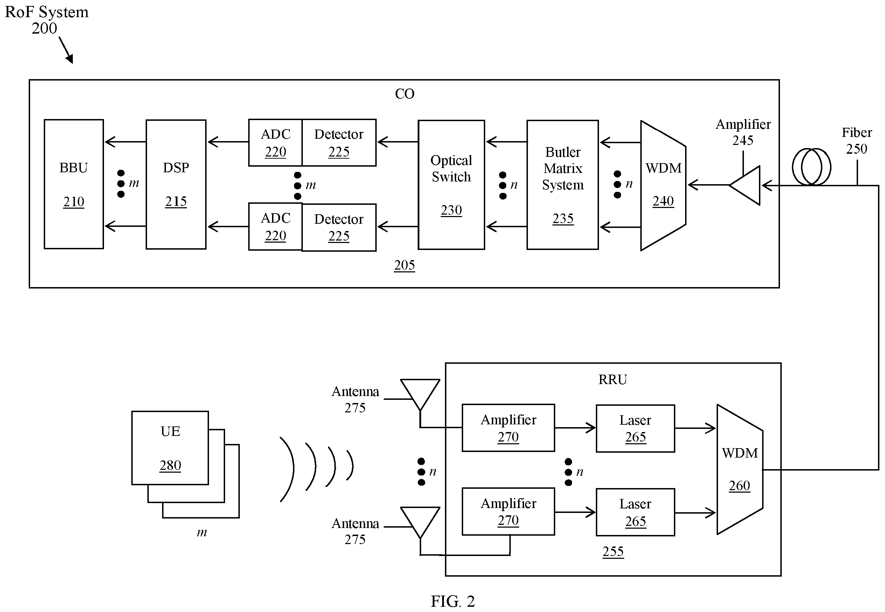

FIG. 2 is a schematic diagram of an RoF system 200 demonstrating a UL configuration according to an embodiment of the disclosure. The RoF system 200 is similar to the RoF system 100 in FIG. 1. Specifically, the RoF system 200 generally comprises a CO 205, a fiber 250 coupled to the CO 205, a RRU 255 coupled to the fiber 250, and one or more UEs 280 that can communicate wirelessly with the RRU 255. The RoF system 200 is similar to the CO 105, the fiber 150, the RRU 155, and the UEs 180, respectively, of the RoF system 100. In addition, the CO 205 comprises a BBU 210, a DSP 215 coupled to the BBU 210, an optical switch 230 coupled to the DSP 215, a Butler matrix system 235 coupled to the optical switch 230, a WDM 240 coupled to the Butler matrix system 235, and an amplifier 245 coupled to the WDM 240. The components of the RRU 255 are similar to the BBU 110, the DSP 115, the optical switch 130, the Butler matrix system 135, the WDM 140, and the amplifier 145, respectively, of the RRU 155. Furthermore, the RRU 255 comprises a WDM 260 and *n* number of antennae 275, which are similar to the WDM 160 and the antennae 175, respectively. The similar components may perform similar functions. However, unlike in the RoF system 100, the CO 205 further comprises m number of ADCs 220 and *m* number of detectors 225. The RRU 255 further comprises *n* number of lasers 265 and *n* number of amplifiers 270.

In operation, the UE 280 converts an electrical signal into a RF signal and transmits the RF signal towards the antenna 275 of the RRU 255. In the RRU 255, the antenna 275 receives the RF signal and converts the RF signal into an analog electrical signal. The amplifier 270 amplifies the analog electrical signal to create an amplified electrical signal. The laser 265 generates an optical signal and modulates the amplified electrical signal onto the optical signal using IM to create a modulated optical signal. The WDM 260 multiplexes the modulated optical signal with other modulated optical signals to create a combined optical signal and passes the combined optical signal towards the CO 205 over the fiber 250.

In the CO 205, the amplifier 245 amplifies the combined optical signal to create an amplified optical signal. The WDM 240 demultiplexes the amplified optical signal to obtain a received optical signal corresponding to the modulated optical signal from the laser 265, and passes the received and demultiplexed optical signal or signals to the Butler matrix system 235. The Butler matrix system 235 introduces a phase shift to the received optical signal to create a shifted optical signal. The phase shift is based on which optical input port of the Butler matrix system 235 receives the received optical signal. The Butler matrix system 235 then passes the shifted optical signal from a corresponding optical output port of the Butler matrix system 235 to the optical switch 230. The optical switch 230 switches the shifted optical signal from an optical input port of the optical switch 230 to a desired optical output port of the optical switch 230, then passes the shifted optical signal to a corresponding detector 225. The detector 225 converts the shifted optical signal into a received analog electrical signal using DD. The ADC 220 converts the received analog electrical signal into a digital electrical signal. The DSP 215 converts the digital electrical signal into a data stream. The BBU 210 further processes the data stream.

The RoF system 100 and the RoF system 200 may be combined into a single RoF system. In such an RoF system, the RoF system 100 provides DL functionality and the RoF system 200 provides UL functionality. Thus, the components of the COs 105, 205 may be in a single transceiver, and the components of the RRUs 155, 255 may be in a single transceiver. The UEs 180, 280 may be the same UE.

FIG. 3 is a schematic diagram of a Butler matrix system 300 according to an embodiment of the disclosure. The Butler matrix system 300 implements the Butler matrix systems 135, 235. Specifically, within the Butler matrix system 135, there may be m number of Butler matrix systems 300, one corresponding to each DAC 120 and laser 125. Similarly, within the Butler matrix system 235, there may be m number of Butler matrix systems 300 corresponding to each ADC 220 and detector 225.

The Butler matrix system 300 comprises UL ports $U_1$, $U_2$, $U_3$, $U_4$; hybrid couplers 310, 320, 350, 360; PSs 330, 340; and DL ports $D_1$, $D_2$, $D_3$, $D_4$. The UL ports $U_1$, $U_2$, $U_3$, $U_4$ couple to the optical output ports of the optical switches 130, 230. The UL ports $U_1$, $U_2$, $U_3$, $U_4$ are optical input ports in the Butler matrix system 135 and are optical output ports in the Butler matrix system 235. The DL ports $D_1$, $D_2$, $D_3$, $D_4$ couple to the WDMs 140, 240. The DL ports $D_1$, $D_2$, $D_3$, $D_4$ are optical output ports in the Butler matrix system 135 of FIG. 1; and are optical input ports in the Butler matrix system 235 of FIG. 2. The hybrid couplers 310, 320, 350, 360 and the PSs 330, 340 may be referred to as Butler matrix components. The hybrid couplers 310 320 in the embodiment shown are coupled to input (i.e., UL) port subsets, while the hybrid couplers 350 and 360 are coupled to output (i.e., DL) port subsets. In the example shown in the figure, the hybrid coupler 310 is coupled to an input port subset comprising UL ports $U_3$ and $U_4$, while the hybrid coupler 320 is coupled to an input port subset comprising UL ports $U_1$ and $U_2$. In the example shown in the figure, the hybrid coupler 350 is coupled to an output port subset comprising DL ports $D_2$ and $D_4$, while the hybrid coupler 360 is coupled to an output port subset comprising DL ports $D_1$ and $D_3$. The hybrid couplers 310, 320, 350, 360 and the PSs 330, 340 may be passive components, and may be on a single integrated optical circuit. Four 1x2 passive optical couplers and optical delay lines implement the hybrid couplers 310, 320, 350, 360, which produce a -90° phase shift. Optionally, the hybrid couplers 310, 320, 350, 360 implement free-space optics.

Optical delay lines implement the PSs 330, 340, which produce a -45° phase shift. The optical delay lines in the hybrid couplers 310, 320, 350, 360 and the PSs 330, 340 have lengths as follows:

$$\Delta L = \frac{\Delta \phi}{n_g \left( \frac{2\pi f}{c} \right)} \tag{1}$$

where $\Delta L$ is a difference in length between a first set of optical delay lines and a second set of optical delay lines, $\Delta \phi$ is a relative phase shift between the first set of optical delay lines and the second set of optical delay lines, $n_g$ is a group index of the optical delay lines, $f$ is a frequency of an optical signal passing through the optical delay lines, and c is the speed of light in a vacuum. Thus, $\Delta \phi$ is -90° for the hybrid couplers 310, 320, 350, 360, and $\Delta \phi$ is 45° for the PSs 330, 340, although only phase shifts for a single input U1 is shown (see example discussed below).

In the DL direction, the Butler matrix system 300 has the following relationship between optical signals at the UL ports $U_1$, $U_2$, $U_3$, $U_4$ and optical signals at the DL ports $D_1$, $D_2$, $D_3$, $D_4$:

$$D = C * U \tag{2}$$

$$\begin{bmatrix} D_{D_1} \\ D_{D_2} \\ D_{D_3} \\ D_{D_4} \end{bmatrix} = \begin{bmatrix} e^{-j45°} & e^{-j135°} & e^{-j90°} & e^{-j180°} \\ e^{-j90°} & e^{-j0°} & e^{-j225°} & e^{-j135°} \\ e^{-j135°} & e^{-j225°} & e^{-j0°} & e^{-j90°} \\ e^{-j180°} & e^{-j90°} & e^{-j135°} & e^{-j45°} \end{bmatrix} \begin{bmatrix} U_{U_1} \\ U_{U_2} \\ U_{U_3} \\ U_{U_4} \end{bmatrix}$$

where D represents optical signals at the DL ports $D_1$, $D_2$, $D_3$, $D_4$; C is a scattering matrix of the Butler matrix system 300; and U represents optical signals at the UL ports $U_1$, $U_2$, $U_3$, $U_4$. FIG. 3 shows phase shifts for an optical signal entering the UL port $U_1$, traveling in a DL direction, and exiting the DL ports $D_1$, $D_2$, $D_3$, $D_4$. As shown, a first optical signal $U_{U_1}$ enters the UL port $U_1$ with a 0° phase shift. The first optical signal passes through the hybrid coupler 320 and splits into the first optical signal with a 0° phase shift and a second optical signal with a -90° phase shift. The first optical signal passes through the PS 340 and undergoes a -45° phase shift. The first optical signal passes through the hybrid coupler 360 and splits into the first optical signal with a -45° phase shift and a third optical signal with a -135° phase shift. At the same time, the second optical signal passes through the hybrid coupler 350 and splits into the second optical signal with a -90° phase shift and a fourth optical signal with a -180° phase shift. The first optical signal exits the DL port $D_1$ as $D_{D_1}$ with a -45° phase shift, the second optical signal exits the DL port $D_2$ as $D_{D_2}$ with a -90° phase shift, the third optical signal exits the DL port $D_3$ as $D_{D_3}$ with a -135° phase shift, and the fourth optical signal exits the DL port $D_4$ as $D_{D_4}$ with a -180° phase shift.

For a DL transmission, where only $U_{U_1}$ is input into the Butler matrix system 135 of the CO 105 (see FIG. 1), the four resulting phase-shifted outputs at the DL ports $D_1$-$D_4$ can be multiplexed together by the WDM 240 for transmission over the fiber 250 to the RRU 155.

In the UL direction, the Butler matrix system 300 has the following relationship between optical signals at the UL ports $U_1$, $U_2$, $U_3$, $U_4$ and optical signals at the DL ports $D_1$, $D_2$, $D_3$, $D_4$:

$$U = C^T * D \tag{3}$$

$$\begin{bmatrix} U_{U_1} \\ U_{U_2} \\ U_{U_3} \\ U_{U_4} \end{bmatrix} = \begin{bmatrix} e^{-j45°} & e^{-j90°} & e^{-j135°} & e^{-j180°} \\ e^{-j135°} & e^{-j0°} & e^{-j225°} & e^{-j90°} \\ e^{-j90°} & e^{-j225°} & e^{-j0°} & e^{-j135°} \\ e^{-j180°} & e^{-j135°} & e^{-j90°} & e^{-j45°} \end{bmatrix} \begin{bmatrix} D_{D_1} \\ D_{D_2} \\ D_{D_3} \\ D_{D_4} \end{bmatrix}$$

where U is the same as in equation 2, $C^T$ is a transpose matrix of C in equation 2, and D is the same as in equation 2. A generic optical signal D undergoing IM, traveling in a UL direction, and entering a DL port $D_1$, $D_2$, $D_3$, or $D_4$ may be represented as follows:

$$D = [1 + m_e cos(w_e t)]I_0 \qquad\qquad (4)$$

where $m_e$ is a modulation amplitude, $w_e$ is an angular frequency of the RF signal, $t$ is a time, and $I_0$ is an average signal intensity. Thus, the resulting $U_{D_1}$ and $U_{D_1}$ are represented as follows:

$$U_{D_1} = [1 + m_e cos(w_e t - 90°)]I_0 + [1 + m_e cos(w_e t - 180°)]I_0 + \qquad (5)$$
$$[1 + m_e cos(w_e t - 270°)]I_0 + [1 + m_e cos(w_e t)]I_0$$
$$= 4I_0$$

$$U_{D_4} = [1 + m_e cos(w_e t - 225°)]I_0 + [1 + m_e cos(w_e t - 225°)]I_0 + \qquad (6)$$
$$[1 + m_e cos(w_e t - 225°)]I_0 + [1 + m_e cos(w_e t - 225°)]I_0$$
$$= 4[1 + m_e cos(w_e t - 225°)]I_0$$

As shown, $U_{D_1}$ has only a non-time-varying component. The $U_{D_2}$ and $U_{D_3}$ terms similarly have only non-time-varying components. In contrast, the $U_{D_4}$ term has a time-varying component that contains a signal intended for transmission.

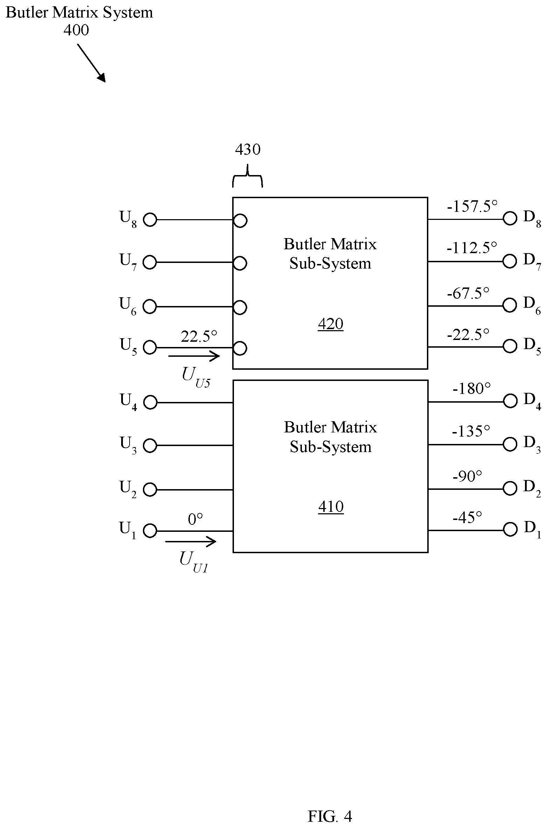

FIG. 4 is a schematic diagram of a Butler matrix system 400 according to another embodiment of the disclosure. The Butler matrix system 400 may be referred to as a one-dimensional cascade system. The Butler matrix system 400 comprises Butler matrix sub-systems 410, 420. However, the Butler matrix system 400 may comprise any suitable number of Butler matrix sub-systems. In addition, the Butler matrix sub-systems 410, 420 may comprise any suitable number of UL ports and DL ports and corresponding hybrid couplers and PSs. The Butler matrix sub-system 410 is similar to the Butler matrix system 300 in FIG. 3. Specifically, the Butler matrix sub-system 410 comprises UL ports $U_1$, $U_2$, $U_3$, $U_4$ and DL ports $D_1$, $D_2$, $D_3$, $D_4$. In addition, the Butler matrix sub-system 410 comprises hybrid couplers and PSs, which are not shown, in the same configuration as the Butler matrix system 300. Furthermore, when a first optical signal $U_{U_1}$ enters the UL port $U_1$ with a 0° phase shift, the first optical signal exits the DL port $D_1$ as $D_{D_1}$ with a -45° phase shift, a second optical signal exits the DL port $D_2$ as $D_{D_2}$ with a -90° phase shift, a third optical signal exits the DL port $D_3$ as $D_{D_3}$ with a -135° phase shift, and a fourth optical signal exits the DL port $D_4$ as $D_{D_4}$ with a -180° phase shift.

The Butler matrix sub-system 420 is also similar to the Butler matrix system 300 in FIG. 3. Specifically, the Butler matrix sub-system 420 comprises UL ports $U_5$, $U_6$, $U_7$, $U_8$ and DL ports $D_5$, $D_6$, $D_7$, $D_8$. In addition, the Butler matrix sub-system 420 comprises hybrid couplers and PSs, which are not shown, in the same configuration as the Butler matrix system 300. However, unlike in the Butler matrix system 300, a fifth optical signal $U_{U_5}$ enters the UL port $U_5$ with a 22.5° phase shift, the fifth optical signal exits the DL port $D_5$ as $D_{D_5}$ with a -22.5° phase shift, a sixth optical signal exits the DL port $D_6$ as $D_{D_6}$ with a -67.5° phase shift, a seventh optical signal exits the DL port $D_7$ as $D_{D_7}$ with a -112.5° phase shift, and an eighth optical signal exits the DL port $D_8$ as $D_{D_8}$ with a -157.5° phase shift. To accomplish the 22.5° phase shift for the first optical signal, the Butler matrix sub-system 420 may comprise a PS 430 at each UL port $U_5$, $U_6$, $U_7$, $U_8$ before the hybrid couplers, or alternatively may be included at the input ports $U_5$-$U_8$.

A Butler matrix system may be designed based on a needed number of hybrid couplers and a number of PSs. A Butler matrix system of size $n$ x $n$ (as in the Butler matrix system 300) comprises $\frac{n}{2}\log_2 n$ hybrid couplers and $\frac{n}{2}(\log_2 n - 1)$ PSs. However, cascading the Butler matrix sub-systems, as in the Butler matrix system 400, reduces the number of hybrid couplers and PSs. For example, when $n = 8$ and $x = 1$, a Butler matrix system like the Butler matrix system 300, but with 8 UL ports and 8 DL ports, comprises 12 hybrid couplers. In contrast, when $n = 4$ *and* $x = 2$, the Butler matrix system 400 comprises 8 hybrid couplers.

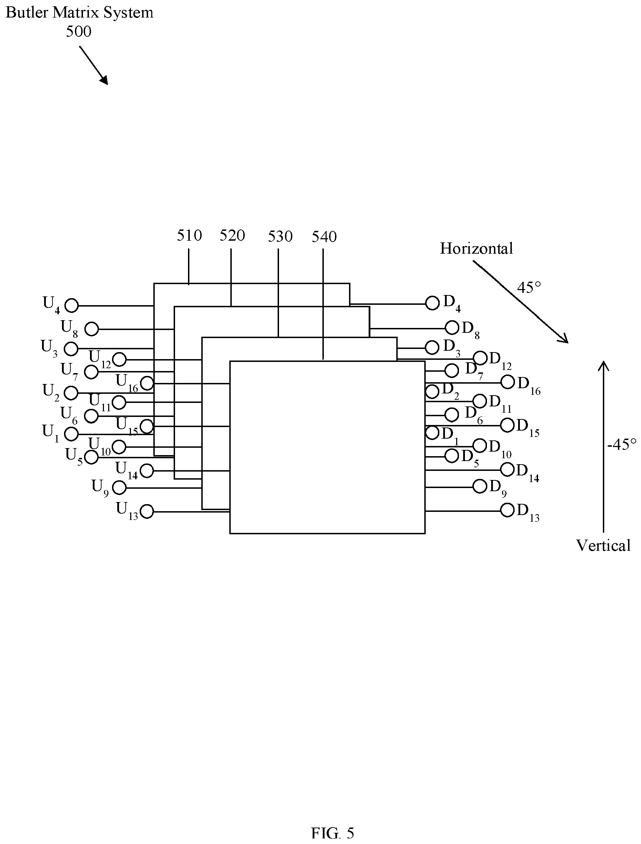

FIG. 5 is a schematic diagram of a Butler matrix system 500 according to yet another embodiment of the disclosure. The Butler matrix system 500 may be referred to as a two-dimensional cascade system. The Butler matrix system 500 comprises Butler matrix sub-systems 510, 520, 530, 540. The Butler matrix sub-systems 510, 520, 530, 540 are similar to the Butler matrix system 300 in FIG. 3. Specifically, the Butler matrix sub-systems 510, 520, 530, 540 comprise four UL ports and four DL ports. However, unlike in the Butler matrix system 300, optical signals entering and exiting the Butler matrix sub-systems 510, 520, 530, 540 have the following phase shifts:

|  | 510 | 520 | 530 | 540 |
|---|---|---|---|---|
| first UL port | 0° | 45° | 90° | 135° |
| first DL port | -45° | 0° | 45° | 90° |
| second DL port | -90° | -45° | 0° | 45° |
| third DL port | -135° | -90° | -45° | 0° |
| fourth DL port | -180° | -135° | -90° | -45° |

As can be seen, the phase shifts increase by 45° in a horizontal direction in the figure, across the Butler matrix sub-systems 510, 520, 530, 540 and decrease by 45° in a vertical direction as a DL port number increases.

Though the Butler matrix system 400 comprises two Butler matrix sub-systems 410, 420 and the Butler matrix system 500 comprises four Butler matrix sub-systems 510, 520, 530, 540, the Butler matrix systems 400, 500 may comprise any suitable number of Butler matrix sub-systems. Though the Butler matrix system 300 and the Butler matrix sub-systems 410, 420, 510, 520, 530, 540 comprise four UL ports and four DL ports, the Butler matrix system 300 and the Butler matrix sub-systems 410, 420, 510, 520, 530, 540 may comprise any suitable number of UL ports and DL ports and corresponding hybrid couplers and PSs. Though the Butler matrix systems 300, 400, 500 are shown as implementing specific phase shifts, the Butler matrix systems 300, 400, 500 may implement any suitable phase shifts. The Butler matrix systems 300, 400, 500 may be fabricated as part of PICs.

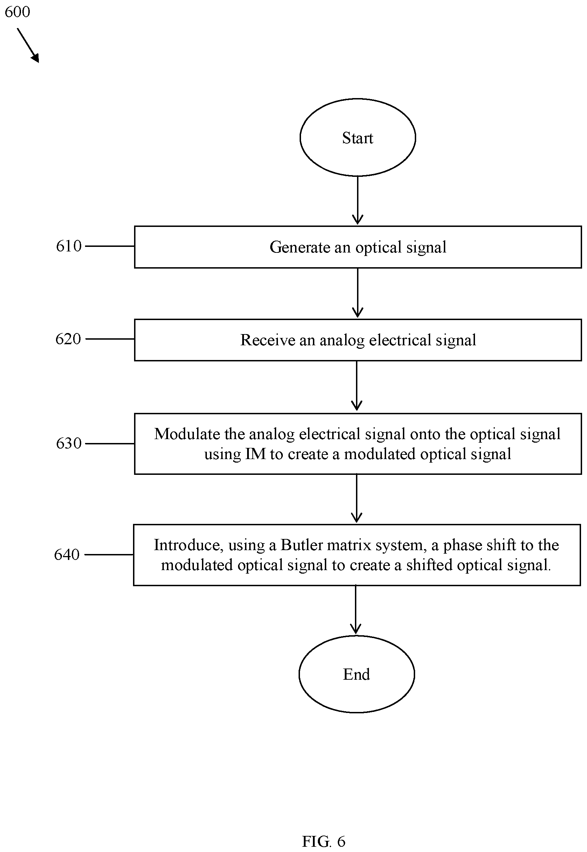

FIG. 6 is a flowchart illustrating a method 600 of optically implementing a Butler matrix according to an embodiment of the disclosure. The method 600 comprises communications in an UL direction and UL components, for instance the components in the CO 105, implement the method 600. At step 610, an optical signal is generated. For instance, the laser 125 generates the optical signal. At step 620, an analog electrical signal is received. For instance, the laser 125 receives the analog electrical signal. At step 630, the analog electrical signal is modulated onto the optical signal using IM to create a modulated optical signal. For instance, the laser 125 creates the modulated optical signal. Finally, at step 640, a Butler matrix system introduces a phase shift to the modulated optical signal to create a shifted optical signal. For instance, the Butler matrix system 135 introduces the phase shift.

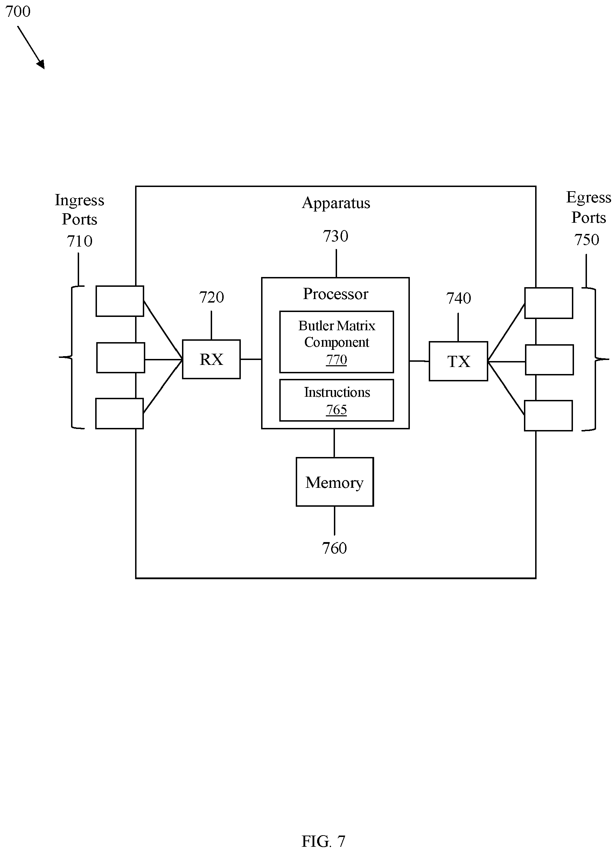

FIG. 7 is a schematic diagram of an apparatus 700 according to an embodiment of the disclosure. The apparatus 700 may implement the disclosed embodiments. The apparatus 700 comprises ingress ports 710 and an RX 720 coupled to the ingress ports 710 for receiving data; a processor, logic unit, baseband unit, or CPU 730 coupled to the RX 720 to process the data; a TX 740 coupled to the processor 730, egress ports 750 coupled to the TX 740 for transmitting the data; and a memory 760 coupled to the processor 730 for storing the data. The memory 760 in some embodiments stores instructions 765. The apparatus 700 may also comprise OE components, EO components, or RF components coupled to the ingress ports 710, the RX 720, the TX 740, and the egress ports 750 for ingress or egress of optical, electrical signals, or RF signals.

The processor 730 is any combination of hardware, middleware, firmware, or software. The processor 730 comprises any combination of one or more CPU chips, cores, FPGAs, ASICs, or DSPs. The processor 730 communicates with the ingress ports 710, the RX 720, the TX 740, the egress ports 750, and the memory 760. The processor 730 implements a Butler matrix component 770, implementing the disclosed embodiments. The inclusion of the Butler matrix component 770 therefore provides a substantial improvement to the functionality of the apparatus 700 and effects a transformation of the apparatus 700 to a different state. Alternatively, the memory 760 stores the Butler matrix component 770 as instructions, and the processor 730 executes those instructions.

The memory 760 comprises any combination of disks, tape drives, or solid-state drives. The apparatus 700 may use the memory 760 as an over-flow data storage device to store programs when the apparatus 700 selects those programs for execution and to store instructions and data that the apparatus 700 reads during execution of those programs. The memory 760 may be volatile or non-volatile and may be any combination of ROM, RAM, TCAM, or SRAM.

In an example embodiment, the apparatus 700 includes an optical signal module generating an optical signal, an analog signal module receiving an analog electrical signal, an optical modulation module modulating the analog electrical signal onto the optical signal using intensity modulation (IM) to create a modulated optical signal, and a phase shift module introducing, using a Butler matrix system, a phase shift to the modulated optical signal to create a phase-shifted modulated optical signal. In some embodiments, the apparatus 700 may include other or additional modules for performing any one of or combination of steps described in the embodiments. Further, any of the additional or alternative embodiments or aspects of the method, as shown in any of the figures or recited in any of the claims, are also contemplated to include similar modules.

In an example embodiment, a CO comprises IM laser elements and a Butler matrix system element coupled to the IM laser elements. The Butler matrix system element comprises optical input port elements, Butler matrix component elements coupled to the optical input port elements, and optical output port elements coupled to the Butler matrix component elements.

A first component is directly coupled to a second component when there are no intervening components, except for a line, a trace, or another medium between the first component and the second component. The first component is indirectly coupled to the second component when there are intervening components other than a line, a trace, or another medium between the first component and the second component. The term "coupled" and its variants include both directly coupled and indirectly coupled. The use of the term "about" means a range including $\pm 10\%$ of the subsequent number unless otherwise stated.

While several embodiments have been provided in the present disclosure, it may be understood that the disclosed systems and methods might be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, components, techniques, or methods without departing from the scope of the present disclosure. Other items shown or discussed as coupled may be directly coupled or may be indirectly coupled or communicating through some interface, device, or intermediate component whether electrically, mechanically, or otherwise. Other examples of changes, substitutions, and alterations are ascertainable by one skilled in the art and may be made without departing from the scope disclosed herein.

**Claims**

1. A system comprising a central office, CO, said CO comprising:

    a plurality of intensity-modulation, IM, lasers (125) each of which is configured to generate a separate optical data signal;
    a Butler matrix system (135) coupled to the plurality of IM lasers (125) comprising:

        a plurality of optical input ports provided correspondingly for the plurality of the IM lasers (125),
        Butler matrix components coupled to the plurality of the optical input ports, and
        a plurality of optical output ports coupled to the Butler matrix; wherein
        the Butler matrix is configured to generate a plurality of optical data signals comprising different phase shifts for beamforming of an optical data signal provided by one of the plurality of IM lasers (125);
        first wavelength-division multiplexers (140) connected to the optical output ports of the Butler matrix system (133) and configured to multiplex the plurality of optical data signals comprising different phase shifts to provide a serial optical data stream; the system also comprising:

            a fibre (150) connected at one end of an amplifier (145) coupled to the first wavelength-division multiplexers (140);
            second wavelength-division multiplexers (160) connected to another end of the fibre (150) and configured to demultiplex the serial optical data stream into the optical data signals comprising different phase shifts;
            detectors (165) connected to the second wavelength-division multiplexers (160) and configured to convert the demultiplexed optical data signals comprising different phase shifts into electrical data signals; and
            antennas (175) configured to radiate the electrical data signals.

2. The system of claim 1, wherein the plurality of the IM lasers (125) are directly modulated lasers, DMLs, or electro-absorption modulated lasers, EMLs.

3. The system of any of claims 1 to 2, wherein the Butler matrix components comprise:

    a first hybrid coupler (310) coupled to a first input port subset of the plurality of the optical input ports;
    a first phase shifter, PS, (330) coupled to the first hybrid coupler (310); and
    a second hybrid coupler (350) coupled to the first PS (330) and to a first output port subset of the plurality of the optical output ports.

4. The system of claim 3, wherein the Butler matrix components further comprise:

a third hybrid coupler (320) coupled to a second input port subset of the plurality of optical the input ports and to the second hybrid coupler (350) ;
a second PS (340) coupled to the third hybrid coupler; and
a fourth hybrid coupler (360) coupled to the first hybrid coupler (310), to the second PS (340), and to a second output port subset of the plurality of the optical output ports.

5. The system of any of claims 1 to 4, wherein the Butler matrix system is indirectly coupled to the plurality of the IM lasers (125).

6. The system of claim 5, further comprising an optical switch (130) coupled to the plurality of the IM lasers (125) and to the Butler matrix system.

7. The system of claim 6, further comprising a plurality of digital-to-analog converters, DACs, (115) coupled to the plurality of the IM lasers (125).

8. The system of claim 7, further comprising a digital signal processor, DSP, (115) coupled to the plurality of the DACs (120).

9. The system of claim 8, further comprising a baseband unit, BBU, (110) coupled to the DSP (115).

10. A method comprising:

generating an optical signal;
receiving an analog electrical signal;
modulating the analog electrical signal onto the optical signal using intensity modulation, IM, to create a modulated optical signal;
introducing, using a Butler matrix system (135), a phase shift to the modulated optical signal to create a plurality of optical data signals comprising different phase shifts;

multiplexing the plurality of optical data signals comprising different phase shifts to provide a serial optical data stream;
transmitting the serial optical data stream via a fibre (150);
demultiplexing the serial optical data stream into the optical data signals comprising different phase shifts;
converting the demultiplexed optical data signals comprising different phase shifts into electrical data signals; and
radiating the electrical data signals via antennas (175).

11. The method of claim 10, wherein the introducing the phase shift comprises:

passing the modulated optical signal through a first hybrid coupler (310); and
passing the modulated optical signal through a second hybrid coupler (350).

12. The method of claim 11, wherein the introducing the phase shift further comprises passing the modulated optical signal through a phase shifter, PS, (330) after the first hybrid coupler (310) and before the second hybrid coupler (350).

13. The method of claim 12, wherein the passing the modulated optical signal through the first hybrid coupler introduces a 0° phase shift, passing the modulated optical signal through the PS introduces a 45° phase shift, and passing the modulated optical signal through the second hybrid coupler introduces a 90° phase shift for a total 135° phase shift.

14. The method of any of claims 10 to 13, wherein the phase-shifted modulated optical signal corresponds to an antenna in a multiple-input and multiple-output, MIMO, beamforming scheme based on an amount of the phase shift.

15. The method of any of claims 10 to 14, wherein the steps are carried out in a radio over fiber, RoF, system (100, 200).

**Patentansprüche**

1. System, das eine Vermittlungsstelle (central office - CO) umfasst, wobei die CO Folgendes umfasst:

   mehrere Intensitätsmodulations(IM)-Laser (125), die jeweils konfiguriert sind, um ein getrenntes optisches Datensignal zu erzeugen;
   ein Butlermatrixsystem (135), das mit den mehreren IM-Lasern (125) gekoppelt ist, das Folgendes umfasst:

   mehrere optische Eingangsanschlüsse, die entsprechend für die mehreren IM-Laser (125) bereitgestellt sind,
   Butlermatrixkomponenten, die mit den mehreren optischen Eingangsanschlüssen gekoppelt sind, und
   mehrere optische Ausgangsanschlüsse, die mit der Butlermatrix gekoppelt sind; wobei
   die Butlermatrix konfiguriert ist, um mehrere optische Datensignale zu erzeugen, die unterschiedliche Phasenverschiebungen für eine Strahlformung eines optischen Datensignals umfassen, das durch einen der mehreren IM-Laser (125) bereitgestellt wird;
   erste Wellenlängenmultiplexer (140), die mit den optischen Ausgangsanschlüssen des Butlermatrixsystems (133) verbunden und konfiguriert sind, um die mehreren optischen Datensignale zu multiplexen, die unterschiedliche Phasenverschiebungen umfassen, um einen seriellen optischen Datenstrom bereitzustellen; wobei das System ebenso Folgendes umfasst:

   eine Faser (150), die mit einem Ende eines Verstärkers (145) verbunden ist, der mit den ersten Wellenlängenmultiplexer (140) verbunden ist;
   zweite Wellenlängenmultiplexer (160), die mit einem anderen Ende der Faser (150) verbunden und konfiguriert sind, um den seriellen optischen Datenstrom in die optischen Datensignale zu demultiplexen, die unterschiedliche Phasenverschiebungen umfassen;
   Detektoren (165), die mit den zweiten Wellenlängenmultiplexern (160) verbunden und konfiguriert sind, um die demultiplexten optischen Datensignale, die unterschiedliche Phasenverschiebungen umfassen, in elektrische Datensignale umzuwandeln; und
   Antennen (175), die konfiguriert sind, um die elektrischen Datensignale auszustrahlen.

2. System nach Anspruch 1, wobei die mehreren IM-Laser (125) direkt modulierte Laser (DMLs) oder elektroabsorptionsmodulierte Laser (EMLs) sind.

3. System nach einem der Ansprüche 1 bis 2, wobei die Butlermatrixkomponenten Folgendes umfassen:

   einen ersten Hybridkoppler (310), der mit einer ersten Eingangsanschlussteilmenge der mehreren optischen Eingangsanschlüsse gekoppelt ist;
   einen ersten Phasenschieber (PS) (330), der mit dem ersten Hybridkoppler (310) gekoppelt ist; und
   einen zweiten Hybridkoppler (350), der mit dem ersten PS (330) und mit einer ersten Ausgangsanschlussteilmenge der mehreren optischen Ausgangsanschlüsse gekoppelt ist.

4. System nach Anspruch 3, wobei die Butlermatrixkomponenten ferner Folgendes umfassen:

   einen dritten Hybridkoppler (320), der mit einer zweiten Eingangsanschlussteilmenge der mehreren optischen Eingangsanschlüsse und mit dem zweiten Hybridkoppler (350) gekoppelt ist;
   einen zweiten PS (340), der mit dem dritten Hybridkoppler gekoppelt ist; und
   einen vierten Hybridkoppler (360), der mit dem ersten Hybridkoppler (310), mit dem zweiten PS (340) und mit einer zweiten Ausgangsanschlussteilmenge der mehreren optischen Ausgangsanschlüsse gekoppelt ist.

5. System nach einem der Ansprüche 1 bis 4, wobei das Butlermatrixsystem mit den mehreren IM-Lasern (125) indirekt gekoppelt ist.

6. System nach Anspruch 5, das ferner einen optischen Schalter (130) umfasst, der mit den mehreren IM-Lasern (125) und mit dem Butlermatrixsystem gekoppelt ist.

7. System nach Anspruch 6, das ferner mehrere Digital-Analog-Wandler (digital-to-analog converters - DACs) (115) umfasst, die mit den mehreren IM-Lasern (125) gekoppelt sind.

8. System nach Anspruch 7, das ferner einen digitalen Signalprozessor (DSP) (115) umfasst, der mit den mehreren DACs (120) gekoppelt ist.

9. System nach Anspruch 8, das ferner eine Basisbandeinheit (baseband unit - BBU) (110) umfasst, die mit dem DSP (115) gekoppelt ist.

10. Verfahren, das Folgendes umfasst:

Erzeugen eines optischen Signals;
Empfangen eines analogen elektrischen Signals;
Modulieren des analogen elektrischen Signals auf das optische Signal unter Verwendung einer Intensitätsmodulation (IM), um ein moduliertes optisches Signal zu erstellen;
Einführen, unter Verwendung eines Butlermatrixsystems (135), einer Phasenverschiebung in das modulierte optische Signal, um mehrere optische Datensignale zu erstellen, die unterschiedliche Phasenverschiebungen umfassen;

Multiplexen der mehreren optischen Datensignale, die unterschiedliche Phasenverschiebungen umfassen, um einen seriellen optischen Datenstrom bereitzustellen;
Übertragen des seriellen optischen Datenstroms über eine Faser (150);
Demultiplexen des seriellen optischen Datenstroms in die optischen Datensignale, die unterschiedliche Phasenverschiebungen umfassen;
Umwandeln der demultiplexten optischen Datensignale, die unterschiedliche Phasenverschiebungen umfassen, in elektrische Datensignale; und
Ausstrahlen der elektrischen Datensignale über Antennen (175).

11. Verfahren nach Anspruch 10, wobei das Einführen der Phasenverschiebung Folgendes umfasst:

Führen des modulierten optischen Signals durch einen ersten Hybridkoppler (310); und
Führen des modulierten optischen Signals durch einen zweiten Hybridkoppler (350).

12. Verfahren nach Anspruch 11, wobei das Einführen der Phasenverschiebung ferner das Führen des modulierten optischen Signals durch einen Phasenschieber (PS) (330) nach dem ersten Hybridkoppler (310) und vor dem zweiten Hybridkoppler (350) umfasst.

13. Verfahren nach Anspruch 12, wobei das Führen des modulierten optischen Signals durch den ersten Hybridkoppler eine 0°-Phasenverschiebung einführt, das Führen des modulierten optischen Signals durch den PS eine 45°-Phasenverschiebung einführt und das Führen des modulierten optischen Signals durch den zweiten Hybridkoppler eine 90°-Phasenverschiebung für eine 135°-Gesamtphasenverschiebung einführt.

14. Verfahren nach einem der Ansprüche 10 bis 13, wobei das phasenverschobene modulierte optische Signal einer Antenne in einem Multiple-Input-Multiple-Output(MIMO)-Strahlformungsschema basierend auf einem Betrag der Phasenverschiebung entspricht.

15. Verfahren nach einem der Ansprüche 10 bis 14, wobei die Schritte in einem Funküber-Faser (radio over fiber-RoF)-System (100, 200) ausgeführt werden.

**Revendications**

1. Système comprenant un centre de commutation, CO, ledit CO comprenant :

une pluralité de lasers à modulation d'intensité, IM, (125) dont chacun est configuré pour générer un signal de données optique séparé ;
un système de matrice de Butler (135) couplé à la pluralité de lasers IM (125) comprenant :

une pluralité de ports d'entrée optiques prévus de ce fait pour la pluralité des lasers IM (125),
des composants de matrice de Butler couplés à la pluralité de ports d'entrée optiques, et
une pluralité de ports de sortie optiques couplés à la matrice de Butler ; dans lequel la matrice de Butler est configurée pour générer une pluralité de signaux de données optiques comprenant différents déphasages pour la formation de faisceaux d'un signal de données optiques fourni par l'un de la pluralité de lasers IM (125) ;

des premiers multiplexeurs en longueur d'onde (140) connectés aux ports de sortie optiques du système de matrice de Butler (133) et configurés pour multiplexer la pluralité de signaux de données optiques comprenant différents déphasages pour fournir un flux de données optiques en série ; le système comprenant également :

une fibre (150) connectée à une extrémité d'un amplificateur (145) couplé à l'un des premiers multiplexeurs en longueur d'onde (140) ;
des seconds multiplexeurs en longueur d'onde (160) connectés à une autre extrémité de la fibre (150) et configurés pour démultiplexer le flux de données optiques série en signaux de données optiques comprenant différents déphasages ;
des détecteurs (165) connectés aux seconds multiplexeurs en longueur d'onde (160) et configurés pour convertir les signaux de données optiques démultiplexés comprenant différents déphasages en signaux de données électriques ; et
des antennes (175) configurées pour rayonner les signaux de données électriques.

2. Système

selon la revendication 1, dans lequel la pluralité des lasers IM (125) sont des lasers directement modulés, DML, ou des lasers modulés par électro-absorption, EML.

3. Système selon l'une quelconque des revendications 1 à 2, dans lequel les composants de la matrice de Butler comprennent :

un premier coupleur hybride (310) couplé à un premier sous-ensemble de ports d'entrée de la pluralité des ports d'entrée optiques ;
un premier déphaseur, PS, (330) couplé au premier coupleur hybride (310) ; et
un deuxième coupleur hybride (350) couplé au premier PS (330) et à un premier sous-ensemble de ports de sortie de la pluralité des ports de sortie optiques.

4. Système
selon la revendication 3, dans lequel les composants de la matrice de Butler comprennent en outre :

un troisième coupleur hybride (320) couplé à un second sous-ensemble de ports d'entrée de la pluralité de ports d'entrée optiques et au deuxième coupleur hybride (350) ;
un second PS (340) couplé au troisième coupleur hybride ; et
un quatrième coupleur hybride (360) couplé au premier coupleur hybride (310), au second PS (340) et à un second sous-ensemble de ports de sortie de la pluralité des ports de sortie optiques.

5. Système

selon l'une quelconque des revendications 1 à 4, dans lequel le système de matrice de Butler est indirectement couplé à la pluralité des lasers IM (125).

6. Système

selon la revendication 5, comprenant en outre un commutateur optique (130) couplé à la pluralité de lasers IM (125) et au système de matrice de Butler.

7. Système selon la revendication 6, comprenant en outre une pluralité de convertisseurs numérique-analogique, DAC, (115) couplés à la pluralité des lasers IM (125).

8. Système

selon la revendication 7, comprenant en outre un processeur de signal numérique, DSP, (115) couplé à la pluralité des DAC (120).

**9.** Système
selon la revendication 8, comprenant en outre une unité de bande de base, BBU, (110) couplée au DSP (115).

**10.** Procédé comprenant :

la génération d'un signal optique ;
la réception d'un signal électrique analogique ;
la modulation du signal électrique analogique sur le signal optique à l'aide d'une modulation d'intensité, IM, pour créer un signal optique modulé ;
l'introduction, à l'aide d'un système de matrice de Butler (135), d'un déphasage vers le signal optique modulé pour créer une pluralité de signaux de données optiques comprenant différents déphasages ;
le multiplexage de la pluralité de signaux de données optiques comprenant différents déphasages pour fournir un flux de données optiques en série ;
la transmission du flux de données optiques en série par l'intermédiaire d'une fibre (150) ;
le démultiplexage du flux de données optiques en série en signaux de données optiques comprenant différents déphasages ;
la conversion des signaux de données optiques démultiplexés comprenant différents déphasages en signaux de données électriques ; et
le rayonnement des signaux de données électriques par l'intermédiaire d'antennes (175).

**11.** Procédé selon la revendication 10, dans lequel l'introduction du déphasage comprend : le passage du signal optique modulé à travers un premier coupleur hybride (310) ; et le passage du signal optique modulé à travers un deuxième coupleur hybride (350).

**12.** Procédé selon la revendication 11, dans lequel l'introduction du déphasage comprend en outre le passage du signal optique modulé à travers un déphaseur, PS, (330) après le premier coupleur hybride (310) et avant le deuxième coupleur hybride (350).

**13.** Procédé selon la revendication 12, dans lequel le passage du signal optique modulé à travers le premier coupleur hybride introduit un déphasage de 0°, le passage du signal optique modulé à travers le PS introduit un déphasage de 45°, et le passage du signal optique modulé à travers le deuxième coupleur hybride introduit un déphasage de 90° pour un déphasage total de 135°.

**14.** Procédé selon l'une quelconque des revendications 10 à 13, dans lequel le signal optique modulé de déphasage correspond à une antenne dans un schéma de formation de faisceaux MIMO à entrées et sorties multiples sur la base d'une quantité du déphasage.

**15.** Procédé selon l'une quelconque des revendications 10 à 14, dans lequel les étapes sont effectuées

dans un système (100, 200) de radio
sur fibre, RoF.

FIG. 1

RoF System
200

CO

205

BBU
210

DSP
215

ADC
220

Detector
225

ADC
220

Detector
225

Optical
Switch
230

Butler
Matrix
System
235

WDM
240

Amplifier
245

Fiber
250

RRU

Antenna
275

Amplifier
270

Laser
265

WDM
260

Antenna
275

Amplifier
270

Laser
265

255

UE
280

m

FIG. 2

EP 3 607 679 B1

Butler Matrix System
300

FIG. 3

EP 3 607 679 B1

Butler Matrix System
400

FIG. 4

Butler Matrix System
500

FIG. 5

600

Start

610 — Generate an optical signal

620 — Receive an analog electrical signal

630 — Modulate the analog electrical signal onto the optical signal using IM to create a modulated optical signal

640 — Introduce, using a Butler matrix system, a phase shift to the modulated optical signal to create a shifted optical signal.

End

FIG. 6

700

Ingress
Ports
710

Apparatus
730

Egress
Ports
750

720

Processor

740

RX

Butler Matrix
Component
770

TX

Instructions
765

Memory

760

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. MARTI et al.** Performance evaluation of multi-beam beamformers in the 40 GHz band. *IST-200-25390 OBANET D5.2,* 2002